# EUROPÄISCHE PATENTSCHRIFT

(11) **EP 2 503 682 B1**
(45) Veröffentlichungstag und Bekanntmachung des Hinweises auf die Patenterteilung: **25.09.2013**
(21) Anmeldenummer: 11159196.2
(22) Anmeldetag: 22.03.2011
(51) Int. Cl.: H02P 3/04

(54) **Schaltungsanordnung**
Switching assembly
Agencement de circuit

(43) Veröffentlichungstag der Anmeldung: 26.09.2012
(73) Patentinhaber: Siemens Aktiengesellschaft, 80333 München (DE)
(72) Erfinder: Hild, Bernhard, 91083 Baiersdorf (DE); Maul, Christian, 90409 Nürnberg (DE); Schwesig, Günter, 91054 Erlangen (DE); Walders, Hanno, 91056 Erlangen (DE)

(56) Entgegenhaltungen:
- DE-A1-102006 060 641
- GB-A- 2 441 570

## Beschreibung

Die Erfindung bezieht sich auf eine Schaltungsanordnung, insbesondere zur Versorgung einer elektromagnetischen Haltebremse mit einer getakteten Versorgungsspannung.

Eine solche Schaltungsanordnung ist durch die GB 2 441 570 bekannt geworden.

An einem leistungsstarken Elektromotor, wie er beispielsweise als drehzahlveränderbarer Antrieb einer Industriemaschine eingesetzt wird, ist mitunter eine elektromechanische Haltebremse angeordnet. Die Bremse dient dazu, die Motorwelle in einer sicherheitskritischen Situation (Systemfehler, Stromausfall, ...) schnell und sicher abzubremsen beziehungsweise zu halten und somit in einen für Mensch und Anlage sicheren Zustand zu überführen. Die Bremse wird zudem häufig als Haltebremse verwendet, um bei einem ausgeschalteten Motor ein selbsttätiges Anlaufen der Motorwelle aufgrund äußerer Einflüsse sicher zu verhindern.

Eine solche elektromechanische Haltebremse ist oftmals in Form einer sogenannten Federdruckbremse ausgeführt. Diese umfasst in der Regel einen Permanentmagneten, eine Induktivität, eine Feder und Reibflächen (Bremsflächen). Die Induktivität und der Permanentmagnet sind an einem Lagerschild, die Reibfläche mit der Feder auf der Motorwelle befestigt. Im stromlosen Zustand werden die Reibflächen über das Feld des Permanentmagneten zusammengedrückt.

Eine derartige Federdruckbremse wird durch eine Federkraft in einer Bremsstellung vorgespannt. Sie befindet sich in ihrem Ruhezustand also in der Bremsstellung und kann aus dieser Bremsstellung durch Anlegen einer Spannung gelöst ("gelüftet") werden, um die Motorwelle freizugeben.

Zum Lüften der Federdruckbremse ist eine bestimmte Spannung erforderlich. Ist die angelegte Spannung zu hoch wird das Feld des Permanentmagneten durch das der Induktivität überkompensiert und die Bremse fällt wieder in die Bremsstellung ein. Daher ist die Bremsennennspannung sehr eng toleriert, beispielsweise 24V(DC) ± 10%.

Prinzipbedingt kann jedoch nach einem Lüftungsvorgang, bei dem die Federdruckbremse gelüftet wurde, die anliegende Bremsenspannung von der Nennspannung auf die sogenannte Haltespannung (beispielsweise 16V (DC)) reduziert werden. Nach einem Lüftungsvorgang sind der entstandene Luftspalt sowie die Federrückstellkraft ausreichend, um die Bremse mit der Haltespannung beziehungsweise dem Haltestrom in einer gelüfteten Position zu halten.

Aus dem Stand der Technik sind elektromagnetische Haltebremsen für elektrische Antriebe bekannt, bei der zur Erzeugung der Bremsspannung ein Tiefsetzsteller vorgesehen ist, welcher durch einen mit einem Pulsweitenmodulator pulsweitenmodulierten Bremsenspannungs-Sollwert angesteuert wird. Bei einer solchen Anordnung ist es möglich, durch Variation des Tastverhältnisses die Bremsenspannung zu steuern. Insbesondere ist es möglich, die Spannung auf den Haltewert unterhalb der Nennspannung abzusenken, indem das Tastverhältnis der Pulsweitenmodulation verringert wird. Dadurch ist die Verlustleistung während des gelüfteten Betriebs gezielt reduzierbar.

Um ein sicheres Bremsenmanagement sicherzustellen, ist bei einem Antrieb typischerweise eine Suppressordiode parallel zu der Induktivität der Haltebremse geschaltet. Bei einem schnellen Einwerfen der Haltebremse beziehungsweise bei einer schnellen Abmagnetisierung sind die Wicklungen der Haltebremsen-Induktivität bestrebt, den durch sie fließenden Strom aufrecht zu erhalten (Freilaufstrom), so dass mitunter sehr hohe Überspannungsspitzen auftreten. Die Suppressordiode unterdrückt die durch die Induktivität entstehenden Überspannungspulse (beispielsweise auf 39V), indem die überschüssige Energie von ihr verbraucht und/oder durchgeleitet wird. Die Suppressordiode schützt somit die Haltebremse sowie die Ansteuerelektronik vor einer Schädigung.

Wird die Haltebremse mit einem pulsweitenmodulierten Spannungssignal angesteuert entsteht hierbei das Problem, dass die Suppressordiode permanent mit Freilaufstrom beaufschlagt wird, wobei die dabei entstehende Verlustleistung nicht abgeführt werden kann.

Der Erfindung liegt daher die Aufgabe zugrunde, eine Schaltungsanordnung für eine elektromagnetische Haltebremse anzugeben, mit der die Haltebremse einerseits mit einer getakteten Versorgungsspannung steuerbar ist und andererseits die Haltebremse bei Bedarf schnell Einwerfen zu können.

Die Aufgabe wird erfindungsgemäß gelöst durch die Merkmale des Anspruchs 1. Vorteilhafte Ausgestaltungen und Weiterbildungen sind Gegenstand der Unteransprüche.

Hierzu umfasst die Schaltungsanordnung, welche für eine Gleichspannungsquelle oder eine gleichgerichtete Zwischenkreisspannung eines Umrichters ausgelegt ist, eine Baugruppe zur gesteuerten Bereitstellung einer getakteten Versorgungsspannung für einen Freilaufbetrieb der Haltebremse. Die Baugruppe weist eine Schalteinheit zum Abschalten der Versorgungsspannung für einen Bremsbetrieb auf. Parallel zu einer Induktivität der Haltebremse sind eine in Sperrrichtung zur Versorgungsspannung gepolte Freilaufdiode einerseits und eine Suppressordiode als Überspannungsschutz andererseits geschaltet. Die Freilaufdiode ist lediglich im Freilaufbetrieb und die Suppressordiode lediglich im Bremsbetrieb wirksam.

Somit wird im getakteten oder gepulsten Betrieb die Suppressordiode umgangen, wodurch die entstehende Verlustleistung vorteilhaft verringert wird. Gleichzeitig ist bei einem Abschalten der Bremse weiterhin ein schnelles Abmagnetisieren über die Suppressordiode möglich.

Unter einer Haltebremse wird insbesondere eine Federdruckbremse der eingangs beschriebenen Art verstanden. Unter Freilaufbetrieb wird die Bereitstellung einer Versorgungsspannung verstanden, bei der sich die Haltebremse in einem gelüfteten Zustand befindet. Unter Bremsbetrieb wird das Abtrennen der Haltebremse von der Versorgungsspannung zum schnellen Einwerfen der Haltebremse beziehungsweise zum schnellen Abmagnetisieren der Induktivität verstanden.

Vor diesem Hintergrund ist in einer zweckdienlichen Ausführung der Schaltungsanordnung ein Freilaufpfad vorgesehen, in dem der Freilaufstrom der Induktivität während des Freilaufbetriebs fließt. Der Freilaufpfad umfasst die Freilaufdiode, die Schalteinheit und die Induktivität. Während der Versorgung mit einer getakteten Spannung begrenzt die Freilaufdiode die Überspannungsspitzen auf ihre Durchlassspannung und schließt die Induktivität über den Freilaufpfad kurz.

In einer ebenso zweckdienlichen Ausführung ist ein Abschaltpfad vorgesehen, bei dem die Induktivität während des Bremsbetriebs durch die Suppressordiode kurzgeschaltet ist. Wird die Haltebremse durch Auslösen der Schalteinheit von der Versorgungsspannung getrennt, so fließt der Freilaufstrom lediglich durch die Suppressordiode und die Bremse fällt besonders schnell ein.

Hierzu ist in einer vorteilhaften Ausgestaltung vorgesehen, dass der Freilaufpfad eine niedrigere Durchlassspannung als die Suppressordiode aufweist. Dadurch wird während des Freilaufbetriebs sichergestellt, dass die Suppressordiode keinen Einfluss auf die Schaltanordnung ausübt.

In einer geeigneten Weiterführung ist die Schaltungsanordnung mit einer Antriebsregelung ausgestattet. Die Antriebsregelung dient unter anderem zur Ansteuerung eines ersten Schalttransistors der Baugruppe mit einem pulsweitenmodulierten oder - modulierbaren Ansteuersignal.

In einer typischen Ausführungsform entspricht die Baugruppe in Verbindung mit dem Freilaufpfad insbesondere einem Tiefsetzsteller, bei dem die Induktivität als Speicherdrossel wirkt. Bei einem Einsatz der Haltebremse als Teil eines elektrischen Antriebs ist die Versorgungsspannung üblicherweise eine Gleichspannungsquelle oder eine gleichgerichtete Zwischenkreisspannung eines dem Antrieb zugeordneten Umrichters. Durch die Komponenten des Tiefsetzstellers wird diese Versorgungsspannung durch Variation des Tastverhältnises der Pulsweitenmodulation auf einen geeigneten Bremsenspannungswert abgesenkt.

In einer vorteilhaften Ausgestaltung ist die Antriebsregelung dazu eingerichtet, zu einem Lösen der Haltebremse den Versorgungsspannungs-Sollwert auf einen Lüftungswert einzustellen und nach dem Lösen der Haltebremse, das heißt während des Freilaufbetriebs, auf einen demgegenüber verringerten Haltewert zu regeln. Der Haltewert ist insbesondere so dimensioniert, dass er gerade ausreicht, um das Einfallen der Haltebremse sicher zu verhindern. Somit entsteht während des Freilaufbetriebs der Haltebremse besonders wenig Verlustleistung, was zu einer vorteilhaften Energieeinsparung und einem kostengünstigeren Betrieb führt. Dies ist besonders bei einem Einsatz der Haltebremse in der thermisch kritischen dezentralen Antriebstechnik von Vorteil.

Die Baugruppe umfasst bevorzugt die Schalteinheit, die Induktivität und den ersten Schalttransistor in Reihenschaltung. Insbesondere ist die Schalteinheit vor der Induktivität geschaltet. Zusätzlich oder alternativ ist davor zusätzlich der erste Schalttransistor angeordnet.

In einer bevorzugten Weiterbildung umfasst die Schaltgruppe einen zweiten Schalttransistor und einen dritten Schalttransistor in Reihenschaltung. Diese beiden Schalttransistoren werden in einer zweckdienlichen Ausgestaltung insbesondere von der Antriebsregelung gesteuert, wobei zum Einwerfen der Haltebremse der erste und/oder der zweite Schalttransistor abgeschaltet werden. Dadurch ist eine zweikanalige Ansteuerung der Haltebremse möglich, wodurch ein besonders sicheres Bremsenmanagement realisiert ist. Auch nach einem Fehler, bei dem beispielsweise einer der beiden Schalttransistoren der Schalteinheit durchlegiert beziehungsweise dauernd leitend ist, bleibt die schnelle Entmagnetisierung der Haltebremse erhalten.

Vor diesem Hintergrund ist in einer zweckdienlichen Ausgestaltung die Antriebsregelung dazu eingerichtet, einen Spannungswert als Diagnosesignal an einem gemeinsamen Spannungsbezugspunkt der Baugruppe und der Suppressordiode zu erfassen und auszuwerten. Mit dem erfassten Diagnosesignal ist die Antriebsregelung dazu in der Lage zu überprüfen, ob die Schalttransistoren der Schaltgruppe ordnungsgemäß arbeiten. Die Überprüfung erfolgt beispielsweise durch einen bestimmten Schaltalgorithmus unter Beobachtung des Diagnosesignals.

Das erfasste Diagnosesignal kann ferner als ein Istwert für einen Regelkreis dienen, bei dem das Tastverhältnis der Pulsweitenmodulation zur Spannungsregelung variiert wird.

Dieses Konzept ist vorzugsweise beim Einbau der Schaltanordnung in motorintegrierten Antriebssystemen realisiert. Das Konzept ist ebenfalls bei der zentralen Antriebstechnik von Vorteil, wobei vorzugsweise eine Stromregelung eingesetzt wird. Bei einer Spannungsregelung wäre eine zusätzliche Sensorleitung zur Erfassung der Spannung direkt an der Haltebremse erforderlich. Bei der Stromregelung ist das Diagnosesignal insbesondere ein Spannungssignal, welches zum Beispiel über einen Shuntwiderstand erfasst wird.

Dadurch ist eine Erhöhung der Genauigkeit der Haltespannung beziehungsweise des Haltestroms der Haltebremse im Freilaufbetrieb möglich beziehungsweise diese Kenngrößen sind genauer einhaltbar. Damit können ferner die Toleranzen der Versorgungsspannung, unterschiedliche Ein/Aus-Schaltzeiten, die Temperaturabhängigkeit des Bremsenwicklungswiderstandes usw. ausgeglichen werden, um möglichst nahe den unteren Wert der Kenngrößen zu erreichen.

Nachfolgend werden Ausführungsbeispiele der Erfindung anhand einer Zeichnung näher erläutert. Es zeigen jeweils in vereinfachten und schematischen Darstellungen:
- FIG 1: ein Prinzipschaltbild einer ersten Ausführungsform einer erfindungsgemäßen Schaltungsanordnung mit gekoppelter Haltebremse,
- FIG 2: eine bevorzugte erste Alternativausführung der Schaltungsanordnung aus FIG 1, und
- FIG 3: eine bevorzugte zweite Alternativausführung der Schaltungsanordnung aus FIG 1.

Einander entsprechende Teile und Größen sind in allen Figuren stets mit den gleichen Bezugszeichen versehen.

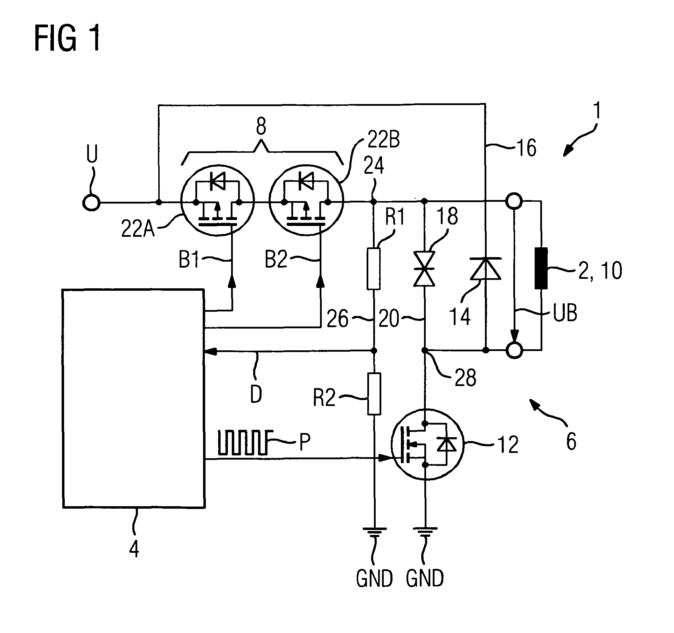

FIG 1 zeigt eine Schaltskizze einer erfindungsgemäßen Schaltungsanordnung 1 für eine pulsweitenmodulierte Steuerung einer elektromagnetischen Haltebremse 2. Die Schaltungsanordnung 1 ist dazu vorgesehen, mit einer Gleichspannung U eines elektrischen Antriebs verbunden zu werden.

Die Schaltungsanordnung 1 umfasst eine Antriebsregelung 4, die in dieser Ausführung zumindest im Wesentlichen durch einen Mikrocontroller mit einer darauf implementierten Steuer- und Auswertesoftware gebildet ist. Die Schaltungsanordnung 1 umfasst weiterhin einen Tiefsetzsteller 6, mit einer Schalteinheit 8, einer Induktivität 10 der Haltebremse 2, einem ersten Schalttransistor 12 und einer Freilaufdiode 14. Die Induktivität 10 und die Schalteinheit 8 sind hierzu in Reihe geschaltet und durch die in Sperrichtung gepolte Freilaufdiode 14 überbrückt. Der Pfad zwischen Induktivität 10, Frei laufdiode 14 und Schalteinheit 8 bildet einen Freilaufpfad 16 oder auch Freilaufkreis.

Der Tiefsetzsteller 6 dient zur Reduzierung der Gleichspannung U und wird von der Antriebsregelung 4 mit einem pulsweitenmodulierten Signal P angesteuert. Das Signal P schaltet den Schalttransistor 12 gemäß dem Tastverhältnis an und aus, wodurch die Gleichspannung U auf eine Bremsenspannung UB zum Betrieb der Haltebremse 2 geregelt wird. Die Bremsenspannung UB entspricht dem Mittelwert der getakteten Gleichspannung U über die Periode des Signals P.

Parallel zur Induktivität 10 und der Freilaufdiode 14 ist zusätzlich eine Suppressordiode 18 geschaltet. Der Pfad zwischen der Induktivität 10 und der Suppressordiode 18 bildet einen Abschaltpfad 20 oder auch Abschaltkreis.

Die Schalteinheit 8 umfasst zwei weitere Schalttransistoren 22A und 22B, welche in Reihe zueinander geschaltet sind. Die Schalttransistoren 12, 22A und 22B sind insbesondere selbstsperrende MOSFETs mit integrierter Inversdiode und weisen im Vergleich zu gewöhnlichen Leistungs-MOSFETs besonders kurze Schaltzeiten auf. Der masseseitige Schalttransistor 12 ist insbesondere ein n-Kanal MOSFET und die pluspolseitigen Schalttransistoren 22A und 22B insbesondere p-Kanal MOSFETs.

Die Schalttransistoren 22A und 22B werden von der Antriebssteuerung 4 mit den Abschaltsignalen B1 und B2 angesteuert. Hierbei wird von der Antriebssteuerung 4 das Abschaltsignal B1 an den Schalttransistor 22A und das Abschaltsignal B2 an den Schalttransistor 22B versendet. Durch die Abschaltsignale B1 und B2 werden die Schalttransistoren 22A und 22B während des Freilaufbetriebs leitend geschaltet.

An einem Knoten 24 ist parallel zum Tiefsetzsteller 6 ein Spannungsteiler 26 angeordnet, der gegen eine Masse GND geschaltet ist. Der Spannungsteiler 26 umfasst zwei geeignet dimensionierte ohmsche Widerstände R1 und R2, über die ein Diagnosesignal D in Form einer Spannung abgegriffen und an die Antriebsregelung 4 gesendet wird.

Zur Überprüfung, ob die Schalttransistoren 22A und 22B ordnungsgemäß arbeiten, werden die Abschaltsignale B1 und B2 in einem bestimmten Schaltalgorithmus an und aus geschaltet und das Diagnosesignals D von der Antriebsregelung 4 erfasst. Mit dieser zweikanaligen Bremsensteuerung ist die Antriebsregelung 4 für ein besonders sicheres Bremsenmanagement eingerichtet. Auch bei einem Fehler, wenn beispielsweise einer der Schalttransistoren 22A oder 22B durchlegiert beziehungsweise dauernd leitend ist, bleibt es weiterhin möglich, die Haltebremse 2 von der Versorgungsspannung zu trennen. Somit ist auch im Fehlerfall eine schnelle Entmagnetisierung der Induktivität 10 über die Suppressordiode 18 und damit ein schnelles Einwerfen der Haltebremse 2 möglich.

Ist der Schalttransistor 12 an geschaltet fließt ein elektrischer Strom von der Gleichspannung U durch die Schalteinheit 8, die Induktivität 10, durch den Schalttransistor 12 zu der Masse GND. Weder die Freilaufdiode 14 noch die Suppressordiode 18 üben in diesem Fall eine aktive Funktion aus. Gleichzeitig wird die Haltebremse 2 mit der Gleichspannung U versorgt (unter Vernachlässigung der an den Schalttransistoren 22A und 22B abfallenden Spannung) beziehungsweise mit der Bremsenspannung UB.

Ist der Schalttransistor 12 aus geschaltet sorgt die Selbstinduktion der Induktivität 10 dafür, dass der Strom zunächst als Freilaufstrom weiter in die ursprüngliche Richtung fließt. Dies führt zu einer Spannungsspitze, die sich zu der Bremsenspannung UB addiert und dabei die Durchbruchspannung der Freilaufdiode 14 überschreitet. Die Freilaufdiode 14 wird leitend und der Freilaufstrom fließt durch den Freilaufkreis 16. Am Knoten 24 verzweigt sich der Freilaufstrom in einen Teilfluss durch die Induktivität 10 und einen Teilfluss durch den Spannungsteiler 26 zur Masse GND.

Während des Pulsbetriebs begrenzt die Freilaufdiode 14 somit die Überspannungsspitzen auf ihre Durchlassspannung und schließt die Induktivität 10 über den Freilaufpfad 16 kurz. Dabei wird die Spannung begrenzt, so dass weder die Haltebremse 2 noch die Schaltungsanordnung 1 geschädigt werden. Sinkt die Bremsenspannung UB wieder ab und unterschreitet dabei die Durchbruchspannung der Freilaufdiode 14, so sperrt die Freilaufdiode 14 erneut.

Bei einem Bremsbetrieb werden die Signale B1 und B2 von der Antriebsregelung 4 nicht mehr an die Schalttransistoren 22A und 22B gesendet, wodurch diese sperrend werden und die Haltebremse 2 von der Gleichspannung U trennen. Dadurch ist ebenfalls der Freilaufpfad 16 unterbrochen, wodurch die Überspannungsspitzen nicht über die Freilaufdiode 14 abbaubar sind. Somit wirkt stattdessen die Suppressordiode 18, die bei einem Überschreiten ihrer Durchbruchsspannung leitend wird.

In einer geeigneten Dimensionierung wird bei einem Lüften der Haltebremse 2 das Tastverhältnis des Signals P kurzzeitig auf 100% geregelt, so dass ein Lüftungswert als (effektive) Bremsenspannung UB von 24V an der Induktivität 10 anliegt. Nach dem Lüften wird zeitversetzt in einen Pulsbetrieb gewechselt. Das Signal P weist hierbei eine Pulsfrequenz von etwa 8 kHz auf sowie ein entsprechendes Tastverhältnis, mit dem die Bremsenspannung UB auf eine Haltespannung der Haltebremse 2 von etwa 16V abnimmt. Die Durchbruchspannung der Suppressordiode liegt bei etwa 39 V.

Der Beginn des Pulsbetriebs bezeichnet ebenso auch den Beginn des Freilaufbetriebs, bei dem der in den Aus-Zeiten des Schalttransistors 12 entstehende Freilaufstrom durch den Freilaufpfad 16 durch die Freilaufdiode 14 und die Schalteinheit 8 zurück in die Induktivität 10 fließt. Wird die Haltebremse 2 durch Auslösen eines oder beider Schalttransistoren 22A und/ oder 22B von der Gleichspannung U getrennt, so wirkt im Bremsbetrieb statt dessen die zum Freilaufpfad 16 parallel geschaltete Suppressordiode 18 und die Haltebremse 2 fällt entsprechend schnell ein.

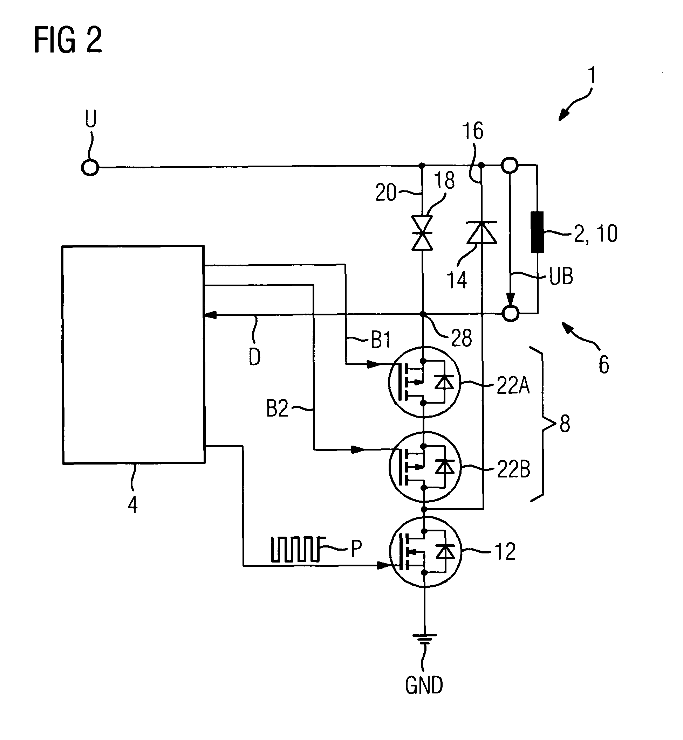

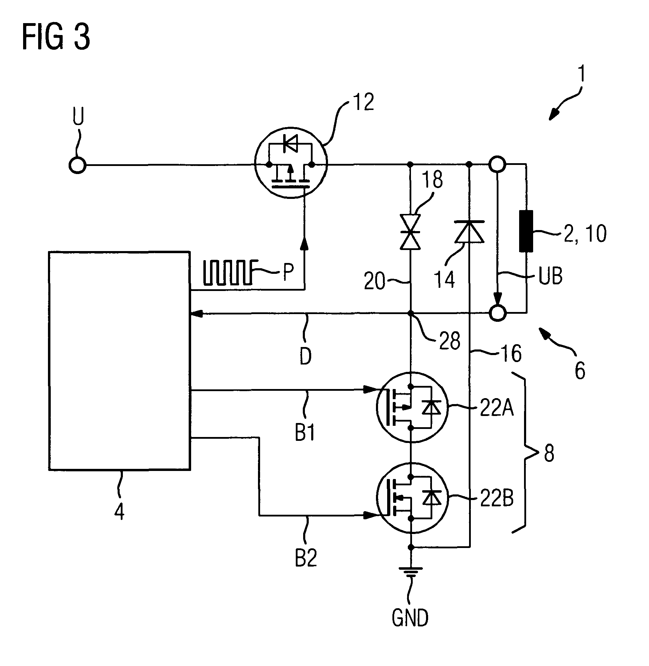

Anhand der FIG 2 und FIG 3 werden nachfolgend zwei weitere Ausführungsvarianten der Schaltanordnung 1 erläutert. Die wesentlichen Unterscheidungsmerkmale der verschiedenen Ausführungsvarianten untereinander ist die relative Anordnung des Schalttransistors 12, der Schalteinheit 8 und der Induktivität 10 in der Reihenschaltung. Wichtig ist vor allem, dass die Schalteinheit 8 und die Induktivität 10 Teil des Freilaufpfades 16 sind, so dass nach einem Auslösen der Schalteinheit 8 im Bremsbetrieb nur noch die Suppressordiode 18 wirkt.

In FIG 3 ist der Schalttransistor 12 ferner zum pluspolseitigen Schalten als p-Kanal leitend ausgeführt. Der Schalttransistor 22B ist in dieser Ausführung masseseitig und somit typischerweise als n-Kanal MOSFET ausgebildet.

Zusammenfassend ist es aufgrund der geschickten Anordnung der Freilaufdiode 14, der Suppressordiode 18 und den Schalttransistoren 12, 22A und 22B möglich, im Pulsbetrieb beziehungsweise Freilaufbetrieb die Suppressordiode 18 zu umgehen. Dadurch wird die entstehende Verlustleistung sowohl an der Haltebremse 2 als auch an der Suppressordiode 18 vorteilhaft verringert. Gleichzeitig ist bei einem Einwerfen (Bremsbetrieb) der Haltebremse 2 weiterhin ein schnelles Abmagnetisieren über die Suppressordiode 18 möglich.

## Patentansprüche

1. Schaltungsanordnung (1) für eine Gleichspannungsquelle und für eine elektromagnetische Haltebremse (2) mit einer Baugruppe (6) zur gesteuerten Bereitstellung einer getakteten Versorgungsspannung für einen Freilaufbetrieb der Haltebremse (2), wobei die Baugruppe (6) eine Schalteinheit (8) zum Abschalten der Versorgungsspannung (UB) für einen Bremsbetrieb aufweist, und mit einer parallel zu einer Induktivität (10) der Haltebremse (2) geschalteten Freilaufdiode (14), **dadurch gekennzeichnet, dass** zusätzlich eine parallel zur Induktivität (10) geschaltete Suppressordiode (18) vorgesehen ist, wobei die Freilaufdiode (14) im Freilaufbetrieb und die Suppressordiode (18) im Bremsbetrieb wirksam sind.

2. Schaltungsanordnung (1) nach Anspruch 1, wobei während des Freilaufbetriebs ein Freilaufpfad (16) umfassend die Freilaufdiode (14), die Schalteinheit (8) und die Induktivität (10) als Strompfad wirksam ist.

3. Schaltungsanordnung (1) nach Anspruch 1 oder 2, wobei während des Bremsbetriebs ein Abschaltpfad (20) umfassend die Suppressordiode (18) und die Induktivität (10) als Strompfad wirksam ist.

4. Schaltungsanordnung (1) nach einem der Ansprüche 1 bis 3, wobei die Freilaufdiode (14) eine niedrigere Durchlassspannung als die Suppressordiode (18) aufweist.

5. Schaltungsanordnung (1) nach einem der Ansprüche 1 bis 4, wobei eine Regelung (4) zur Ansteuerung eines ersten Schalttransistors (12) der Baugruppe (6) mit einem pulsweitenmodulierten Signal (P) vorgesehen ist.

6. Schaltungsanordnung (1) nach einem der Ansprüche 1 bis 5, wobei die Regelung (4) dazu eingerichtet ist, zu einem Lösen der Haltebremse (2) einen Versorgungsspannungs-Sollwert auf einen Lüftungswert einzustellen und nach dem Lösen der Haltebremse (2) die Versorgungsspannung auf einen demgegenüber verringerten Haltewert zu regeln, welcher derart dimensioniert ist, dass er gerade ausreicht, das Einfallen der Haltebremse (2) sicher zu verhindern.

7. Schaltungsanordnung (1) nach einem der Ansprüche 1 bis 6, wobei die Baugruppe (6) die Schalteinheit (8), die Induktivität (10) und den ersten Schalttransistor (12) in Reihenschaltung aufweist.

8. Schaltungsanordnung (1) nach Anspruch 7, wobei die Schalteinheit (8) vor der Induktivität (10) geschaltet ist.

9. Schaltungsanordnung (1) nach Anspruch 7 oder 8, wobei der erste Schalttransistor (12) vor der Schalteinheit(8) und der Induktivität (10) geschaltet ist.

10. Schaltungsanordnung (1) nach einem der Ansprüche 1 bis 9, wobei die Schalteinheit (8) einen zweiten Schalttransistor (22A) und einen dritten Schalttransistor (22B) in Reihenschaltung umfasst.

11. Schaltungsanordnung (1) nach Anspruch 10, wobei die Antriebsregelung (4) dazu eingerichtet ist, zum Abschalten der Versorgungsspannung (UB) den zweiten Schalttransistor (22A) und/oder den dritten Schalttransistor (22B) abzuschalten.

12. Schaltungsanordnung (1) nach einem der Ansprüche 1 bis 11, wobei die Regelung (4) dazu eingerichtet ist, einen Spannungswert (D) als Diagnosesignal an einem Spannungsbezugspunkt (24,28) der Baugruppe (6) und der Suppressordiode (18) zu erfassen und auszuwerten.

## Claims

1. Switching assembly (1) for a DC voltage source and an electromagnetic holding brake (2), with a module (6) for controlled provision of a clocked supply voltage for free-wheeling operation of the holding brake (2), wherein the module (6) has a switching unit (8) for switching off the supply voltage (UB) for braking operation, and with a free-wheeling diode (14) connected in parallel to an inductance (10) of the holding brake (2), **characterised in that** a suppressor diode (18) connected in parallel to the inductance (10) is provided in addition, wherein the free-wheeling diode (14) is effective in free-wheeling operation and the suppressor diode (18) is effective in braking operation.

2. Switching assembly (1) in accordance with claim 1, wherein a free-wheeling path (16) comprising the free-wheeling diode (14), the switching unit (8) and the inductance (10) acts as the current path during free-wheeling operation.

3. Switching assembly (1) in accordance with claim 1 or 2, wherein a switch-off path (20) comprising the suppressor diode (18) and the inductance (10) acts as the current path during braking operation.

4. Switching assembly (1) in accordance with one of claims 1 to 3,
wherein the free-wheeling diode (14) has a lower conducting voltage than the suppressor diode (18).

5. Switching assembly (1) in accordance with one of claims 1 to 4,
wherein a controller (4) for controlling a first switching transistor (12) of the module (6) is provided with a pulse-width-modulated signal (P).

6. Switching assembly (1) in accordance with one of claims 1 to 5,
wherein the controller (4) is configured, for a release of the holding brake (2) to set a supply voltage set value to a ventilation value and, after the release of the holding brake (2), to regulate the supply voltage to a reduced holding value by comparison, which is dimensioned such that it is just sufficient to safely prevent the engagement of the holding brake (2).

7. Switching assembly (1) in accordance with one of claims 1 to 6,
wherein the module (6) features the switching unit (8), the inductance (10) and the first switching transistor (12) in a series circuit.

8. Switching assembly (1) in accordance with claim 7, wherein the switching unit (8) is connected before the inductance (10).

9. Switching assembly (1) in accordance with claim 7 or 8, wherein the first switching transistor (12) is connected before the switching unit (8) and the inductance (10).

10. Switching assembly (1) in accordance with one of claims 1 to 9,
wherein the switching unit (8) comprises a second switching transistor (22A) and a third switching transistor (22B) connected in series.

11. Switching assembly (1) in accordance with claim 10, wherein the drive controller (4), to switch off the supply voltage (UB), is configured to switch off the second switching transistor (22A) and/or the third switching transistor (22B).

12. Switching assembly (1) in accordance with one of claims 1 to 11, wherein the controller (4) is configured to detect and evaluate a voltage value (D) as a diagnostic signal at a voltage reference point (24, 28) of the module (6) and of the suppressor diode (18).

## Revendications

1. Montage ( 1 ) pour une source de tension continue et pour un frein ( 2 ) électromagnétique d'arrêt, comprenant un module ( 6 ) pour la mise à disposition de manière commandée d'une tension d'alimentation cadencée pour un fonctionnement en roue libre du frein ( 2 ) d'arrêt, le module ( 6 ) ayant une unité ( 8 ) de commutation pour interrompre la tension ( UB ) d'alimentation pour un fonctionnement de frein et ayant une diode ( 14 ) de roue libre montée en parallèle à une inductance ( 10 ) du frein ( 2 ) d'arrêt, **caractérisé en ce qu'**il est prévu en plus une diode ( 18 ) de suppression montée en parallèle à l'inductance ( 10 ), la diode ( 14 ) de roue libre étant efficace dans le fonctionnement en roue libre et la diode ( 18 ) de suppression étant efficace dans le fonctionnement en frein.

2. Montage ( 1 ) suivant la revendication 1, dans lequel, pendant le fonctionnement en roue libre, un trajet ( 16 ) en roue libre, comprenant la diode ( 14 ) en roue libre, l'unité ( 8 ) de commutation et l'inductance ( 10 ), est efficace comme trajet du courant.

3. Montage ( 1 ) suivant l'une des revendications 1 ou 2, dans lequel, pendant le fonctionnement en frein, un trajet ( 20 ) d'interruption, comprenant la diode ( 18 ) de suppression et l'inductance ( 10 ), est efficace comme trajet de courant.

4. Montage ( 1 ) suivant l'une des revendications 1 à 3, dans lequel la diode ( 14 ) de roue libre a une tension dans le sens direct plus basse que celle de la diode ( 18 ) de suppression.

5. Montage ( 1 ) suivant l'une des revendications 1 à 4, dans lequel il est prévu une régulation ( 4 ) pour la commande d'un premier transistor ( 12 ) de commutation du module ( 6 ) par un signal ( P ) modulé en largeur d'impulsion.

6. Montage ( 1 ) suivant l'une des revendications 1 à 5, dans lequel la régulation ( 4 ) est conçue pour établir, pour un desserrement du frein ( 2 ) d'arrêt, une valeur de consigne de tension de l'alimentation à une valeur d'alimentation en air et, après que le frein ( 2 ) d'arrêt a été desserré, pour régler la tension d'alimentation à une valeur d'arrêt diminuée par rapport à celle-ci et de dimension telle qu'elle suffit juste à empêcher, de manière sure, le déclenchement du frein ( 2 ) d'arrêt.

7. Montage ( 1 ) suivant l'une des revendications 1 à 6, dans lequel le module ( 6 ), l'unité ( 8 ) de commutation, l'inductance ( 10 ) et le premier transistor ( 12 ) de commutation sont montés en série.

8. Montage ( 1 ) suivant la revendication 7, dans lequel l'unité ( 8 ) de commutation est montée avant l'inductance ( 10 ).

9. Montage ( 1 ) suivant l'une des revendications 7 ou 8, dans lequel le premier transistor ( 12 ) de commutation est monté avant l'unité ( 8 ) de commutation et l'inductance ( 10 ).

10. Montage ( 1 ) suivant l'une des revendications 1 à 9, dans lequel l'unité ( 8 ) de commutation comprend un deuxième transistor ( 22A ) de commutation et un troisième transistor ( 22B ) de commutation montés en série.

11. Montage ( 1 ) suivant la revendication 10, dans lequel la régulation ( 4 ) de l'entraînement est conçue afin d'interrompre la tension ( UB ) d'alimentation, mettre hors circuit le deuxième transistor ( 22A ) de commutation et/ou le troisième transistor ( 22B ) de commutation.

12. Montage ( 1 ) suivant l'une des revendications 1 à 11, dans lequel la régulation ( 4 ) est conçue pour détecter et exploiter une valeur ( D ) de tension comme signal de diagnostic en un point ( 24,28 ) de référence de tension du module ( 6 ) et de la diode ( 18 ) de suppression.
